# EUROPEAN PATENT SPECIFICATION

(11) **EP 0 355 868 B1**
(45) Date of publication and mention of the grant of the patent: **12.07.1995**
(21) Application number: 89118731.2
(22) Date of filing: 24.10.1986
(51) Int. Cl.: C08G 61/10, C12P 7/22

(54) **Biocatalytic process for preparing phenolic resins**
Biokatalytisches Verfahren zur Herstellung phenolischer Harze
Procédé biocatalytique de préparation de résines phénoliques

(30) Priority: 13.11.1985 US 797585; 21.01.1986 US 820861
(43) Date of publication of application: 28.02.1990
(62) Divisional of application: 86906671.2
(73) Proprietor: THE MEAD CORPORATION, Dayton Ohio 45463 (US)
(72) Inventor: Pokora, Alexander R., Reynoldsburg Ohio 43068 (US); Cyrus, William L., Ray Ohio 45672 (US)
(74) Representative: Deans, Michael John Percy

(56) References cited:
- DE-A- 3 037 992

## Description

The present invention relates to a process for preparing phenolic resins.

Alberti and Klibanov, BIOLOGICAL DETOXICATION, Chapter 22, Peroxidase for Removal of Hazardous Aromatics from Industrial Wastewaters, (1982), discloses that phenols can be removed from wastewaters as high molecular weight polymers by the action of peroxidase enzymes. The disclosed method relies on the ability of peroxidase enzyme to catalyze, with hydrogen peroxide, the oxidation of a variety of phenols and aromatic amines. Phenolic and aromatic amine free radicals are generated, which diffuse from the active centre of the enzyme into solution, and polymerize to polyaromatic products. These high molecular weight polymers are water-insoluble and can be readily separated by filtration.

Recording materials utilizing developer resins to produce coloured images from colourless or substantially colourless materials are well-known. Specific examples of such recording materials include pressure-sensitive carbonless copying paper, heat-sensitive recording paper, electro-thermographic recording paper, and the like. They are described in more detail in U.S.-A-2,712,507; 2,730,456; 2,730,457; 3,418,250; 3,432,327; 3,981,821; 3,993,831; 3,996,156; 3,996,405 and 4,000,087. A photographic material has been developed which utilizes this method for forming coloured images. See, for example, U.S.-A-4,399,209 and 4,440,846 to The Mead Corporation.

Much research has been directed to developing new and improved developers for use in the aforementioned recording materials. The preferred developers are principally phenol derivatives and phenolic resins. Phenols, biphenols, methylene bis-diphenols, phenol-formaldehyde novolak resins, metal processed novolak resins, salicylic acid derivatives and salts are representative examples of the phenolic developers that have been used. See U.S.-A-3,934,070 to Kimura teaching salicylic acid derivatives; U.S.-A-3,244,550 to Farnham teaching biphenols, diphenols, and resinous products containing them; and U.S.-A-No. 3,244,549 to Farnham teaching phenol derivatives. Representative examples of phenol-formaldehyde condensates previously used in the art are described in numerous patents, including U.S.-A-3,672,935.

Among the colour developers, phenolformaldehyde condensates have been widely used because they exhibit excellent color development, good coating properties (rheology) and good water resistance. While phenolformaldehyde condensates are advantageous color developers, certain questions have arisen regarding their use in recording materials. Because they are prepared from formaldehyde concern exists that they may be unsafe from both the standpoint of their manufacture and their use in recording materials.

The present invention seeks to provide an improved process for preparing phenolic resins for commercial use.

In accordance with the present invention, we provide a process for the preparation of a phenolic resin which comprises: reacting a phenol with a peroxidase or an oxidase enzyme and a peroxide in an organic/aqueous medium to generate phenolic radicals which react to form a phenolic resin, said phenol being present in 1 to 100 grams per 100 ml solvent; and recovering said phenolic resin.

Resultant such resins may be used as developer resins as described hereinbelow.

The oxidation of phenol by horseradish peroxidase and hydrogen peroxide is known, although previously it has been performed in aqueous systems. See Danner et al., "The Oxidation of Phenol and Its Reaction Product by Horseradish Peroxidase and Hydrogen Peroxide," Archives of Biochemistry and Biophysics, 156, 759-763 (1973); and Sanders et al., "Peroxidase," Butterworth, Inc., Washington, D.C. (1964). It has been found, however, that the reaction proceeds in higher yields and provides a higher molecular weight product if it is performed in an organic-aqueous solvent system.

In the present process biocatalytic oxidation of the phenol is carried out in an organic-aqueous solvent medium. It has been found that the oxidative polymerization reaction proceeds in higher yields and is capable of providing a higher molecular weight product when it is performed in these solvent systems.

One example of our process comprises preparing separate solutions of the phenol, enzyme, and peroxide, and mixing them. The phenol is typically dissolved in an organic solvent, and the enzyme and peroxide are typically dissolved in water. The organic-aqueous solvent system is formed by mixing the solutions. The solutions may be gradually added to a common reaction vessel, or the solutions of the phenol and the enzyme may be pre-mixed and the peroxide, neat or in solution, gradually added thereto. Embodiments of the process are envisioned in which the enzyme is provided on a solid support and the process is carried out on a batch or continuous basis. In any process, it is important to limit the rate of addition of the peroxide since excess peroxide inhibits the reaction.

The organic solvent may be water miscible or water immiscible. If the solvent is water miscible, the reaction proceeds in the solution phase. If the solvent is-water immiscible, a dispersion is formed upon mixing the phenol and the enzyme solutions and, the reaction proceeds at the interface. The resin is recovered from the solvent phase and the enzyme can be recovered from the aqueous phase and re-used.

The preferred process thus comprises preparing a solution of a phenol in a water miscible or a water immiscible solvent and an aqueous solution of an oxidase or peroxidase enzyme, mixing said solutions and adding a peroxide thereto, wherein said phenol reacts with said enzyme and said peroxide and generates phenolic radicals and said radicals react to form a phenolic resin.

Developer resin capable of reacting with an electron-donating colour precursor and producing a visible image and which can be produced by an example of a process in accordance with the present invention may be represented by the formula (I): 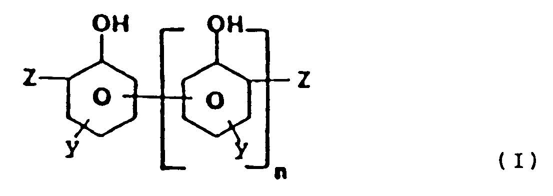
where n is greater than or equal to 2, the phenolic units are bonded to one another through the ortho and/or para positions, Y is present at the meta or para position and is selected from the group consisting of an alkyl group, a halogen atom (e.g., fluorine, chlorine, or bromine), an aryl group, a phenylalkyl group, an allyl group, a group of the formula -COOR where R is a hydrogen atom, an alkyl group or a phenylalkyl group, an amino group of the formula -NR₁R₂ where R₁ and R₂ are the same or different and represent a hydrogen atom or an alkyl group, and Z is a hydrogen atom, an alkyl group, a halogen atom, an aryl group, a phenylalkyl group, a -COOR group, or Z in conjunction with the adjacent meta position represents a condensed benzene ring which may be substituted or unsubstituted, and derivatives thereof obtained by reacting said developer resin with a metal salt.

More preferred developer resins are represented by the formula (II): 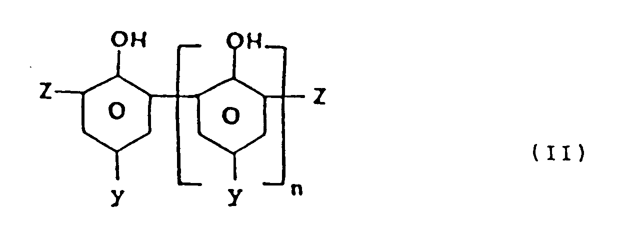
where n, Y and Z are defined as in formula (I).

We describe below a recording material comprising a support, a layer of microcapsules containing in the internal phase a substantially colourless electron-donating colourprecursor on one surface of said support, and an electron-accepting colour developer material present on the same surface of said support as said microcapsules, on the opposite surface of said support as said microcapsules, or on the surface of a separate support, wherein said developer material is a phenolic resin of the formula (I) above and, more preferably, of the formula (II).

Another arrangement is a developer sheet having the aforementioned developer resin on the surface thereof.

Peroxidase and oxidase enzymes are known in the art and are commercially available. The most typical example of a useful peroxidase enzyme is horseradish peroxidase, but other peroxidases such as chloroperoxidase (and other haloperoxidases), lactoperoxidase, and bacterial peroxidases are also useful. In addition, oxidase enzymes such as fungul laccase and tyrosinase may be useful.

The amount of the enzyme used to make the phenolic resin will depend on its activity. The enzyme functions as a catalyst and is not consumed in the reaction. For commercially available enzymes, the enzyme can be reacted in an amount of 10 milligrams to 5 grams per 100 grams phenol.

In accordance with the preferred embodiment the enzyme is dissolved in water and added to a solution of the phenol. The enzyme solution concentration is not particularly critical. It typically ranges from 10 to 365 mg per liter. It is generally desirable to prepare an enzyme solution at a concentration such that it can be added in an approximately equal volume to the solution of the phenol, but this may vary.

The oxidizing agent used in generating the free radicals is typically hydrogen peroxide, but other peroxides are useful. Examples of other potentially useful peroxides include methyl peroxide, ethyl peroxide, etc.

The peroxide is reacted in an amount of 0.1 to 2.5 moles per 100 grams phenol and, more typically, 0.1 to 0.5 moles per 100 grams phenol. Depending upon the nature of the oxidizing agent, it is reacted neat or as a solution. The preferred oxidizing agent, hydrogen peroxide, is dissolved in water. Its concentration may range from 0.001 to 1.0 mol per liter.

The phenol can be reacted in an aqueous or a non-aqueous solvent to produce the resin, but a preferred solvent is an organic-aqueous solvent system including water and a water-miscible or water-immiscible solvent. Representative examples of useful water-immiscible solvents include hexane, trichloroethane, methyl ethyl ketone, ethyl acetate, and butanol. Examples of useful water-miscible solvents include ethanol, methanol, dioxane, tetrahydrofuran (THF), dimethyl formamide, and acetone. The reaction is carried out at phenol concentrations of 1 to 100 g per 100 ml solvent. Solvent-aqueous based systems are particularly preferred because they provide better yields and facilitate recovery and recycling of the enzyme.

As incidated above, a number of different procedures may be used to react the phenol. Solutions of the phenol, enzyme, and peroxide may be individually prepared and metered into a reaction vessel, or solutions of the phenol and enzyme may be pre-mixed and the peroxide gradually added thereto. Alternatively, the enzyme and phenol may be dissolved in a common solvent and the peroxide added. Those skilled in the art will appreciate that a number of reaction/mixing sequence are useful provided that the peroxide is added at a controlled rate which is approximately equal to the rate at which it is consumed such that the concentration of the peroxide does not build to a level at which it undesirably inhibits the reaction.

The organic-aqueous system formed upon mixing the phenol, enzyme and peroxide may contain water and an organic solvent in a volumetric ratio (water:organic) in the range of 1:10 to 10:1, more typically, 1:2 to 2:1, and most typically, about 1:1. The most preferred ratio will vary with the nature of the phenolic monomer(s) that is(are) polymerized.

The reaction of the phenol proceeds at room temperature, but temperatures of 0 to 40°C can be used. The enzymes are temperature sensitive and can lose their activity if the reaction temperature becomes too high. For example, temperatures in excess of 60°C render horseradish peroxidase inactive. However, some latitude exists, depending upon the solvent system which is used. Certain solvents can stabilize the enzyme and thereby permit the use of higher temperatures.

The activity of the enzyme is pH dependent. The reaction is preferably carried out at a pH in the range of 4 to 12 and, more preferably, 4 to 9. Buffers can be used to maintain pH, but are not usually required. One example of a useful buffer is a potassium phosphate buffer.

A pH is selected at which the enzyme is highly active. This will vary with the enzyme and its source. The most preferred pH for Sigma Type I peroxidase (a product of Sigma Chemical Company) is about 6.0. Using this enzyme, deionized water can be used to form the solvent system.

While reference is herein made to the bulk pH of the reaction system, those skilled in the art will appreciate that it is the pH in the micro-environment of the enzyme that is critical. It has been found that enzyme recovered at pH outside the aforementioned ranges is inactive or less active; whereas, if the same enzyme is redissolved at a pH within the aforementioned range and recovered, it is active. Thus, where the phenol is dissolved in water immiscible solvent and the enzyme solution is dispersed in the solution of the phenol, it is the pH of the enzyme solution which is critical.

Phenolic resins prepared in accordance with the present invention are useful in a variety of applications depending on the nature of the phenol and the molecular weight of the resin. The resins are often mixtures of dimers, trimers, and very high molecular weight oligomers. Usually, the major part of the resin, i.e., greater than 50% by weight of the resin, is trimer or higher molecular weight compounds.

The molecular weight of the phenolic resin can be adjusted depending upon its particular end use. In one embodiment, the process of the present invention provides a phenolic resin which is useful as a developer in recording materials such as carbonless copy paper, heat-sensitive recording paper, electrothermographic recording paper and the like. The phenols used in developer resins are preferably para-substituted. The resins may range from 500 to 5000 in molecular weight.

In another embodiment, the process of the present invention provides a phenolic resin which is useful as an adhesive. The phenols used in adhesives need not be para-substituted. The resins typically range from 1000 to 15,000 in molecular weight.

Phenols which are preferred for use in the present invention are represented by the Formula (III): 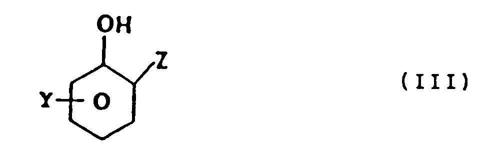
wherein Y and Z are selected from the group consisting of a hydrogen atom, a halogen atom, an alkyl group, an alkoxy group, an aryl group, an allyl group, a phenylalkyl group, a -COOR group where R represents a hydrogen atom or a lower alkyl group, and a -NR₁R₂ group, where R₁ and R₂ represent a hydrogen atom, an alkyl group, or a phenylalkyl group or Z in conjunction with the adjacent meta position forms a condensed benzene ring. Since polymerization proceeds via the ortho or para positions, when Y is at the ortho or para position, at least one of Y and Z must be a hydrogen atom or Z must form said condensed benzene ring.

As discussed above, the most useful phenols which can be polymerized for use in the phenolic developer resins are characterized in that they are para-substituted. Phenols which are not para-substituted tend generally to be too reactive and to generate very highly crosslinked compounds which may not be oil-soluble and which may not have good color developing properties. Thus, the phenols which are preferred for use in the phenolic developer resins are represented by the formula (IV): 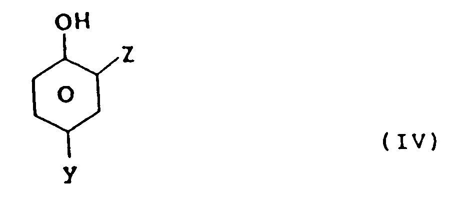
where Y is selected from the group consisting of an alkyl group, an aryl group, a phenylalkyl group, a COOR group, a -NR₁R₂ group, and a halogen atom, and Z is a hydrogen atom, a halogen atom, an alkyl group, an aryl group, a phenylalkyl group, or a -COOR group, or Z in conjunction with the adjacent meta position forms a condensed benzene ring.

Otherwise, the phenol adds as a terminal group as discussed below. At the para position, alkyl groups have a tendency to slow the reaction. The reaction appears to proceed best with a para substituted aryl group.

A single phenol or a mixture of phenols may be used in the process.

In certain applications, it may be desirable to produce phenolic resins having certain terminal groups. This can be accomplished by reacting certain phenols in which the Y substituent is the para position and Y and Z are other than hydrogen or a condensed benzene ring. In this case, the resin contains the Z substituent as a terminal group since the polymerization proceeds via a hydrogen abstraction at the ortho position. Consequently, when the phenol is para-substituted, the latter Z-substituted phenols are typically used in a mixture with other phenols in which at least one of Y and Z is a hydrogen atom or Z is a condensed ring to provide copolymers. When the para position is unsubstituted, polymerization proceeds via the ortho and/or para position and the latter Z-substituted phenols can be incorporated mid-chain.

The alkyl group represented by Y and Z may contain up to 10 carbon atoms and include such alkyl groups as t-butyl, n-butyl, octyl, nonyl, etc. When R,R₁, and R₂ represent an alkyl group, it is typically a lower alkyl group having 1 to 4 carbon atoms.

Representative examples of alkoxy groups for Y and/or Z have 1 to 10 carbon atoms and include methoxy and ethoxy. When Y or Z is an aryl group, it is typically a phenyl group or substituted phenyl group such as a halogen-substituted phenyl group, an alkyl-substituted phenyl or a phenol group such as a 4'-phenol group.

Examples of a halogen atom include fluorine, chlorine, bromine and iodine.

Representative examples of phenylalkyl groups include benzyl, isopropylidene phenyl, butylidene phenyl, isopropylidene-4'-phenol, and butylidene-4'-phenol.

Specific examples of phenols which can be polymerized in accordance with the process are phenol 4-t-butylphenol, 4-n-butylphenol, 4-ethylphenol, cresol, p-phenylphenol, p-octylphenol, p-nonylphenol, p-hydroxybenzoic acid, 4-hydroxynaphthoic acid, p,p'-biphenol, 4-aminosalicylic acid, salicylic acid, methyl salicylate, ethyl salicylate, 4,4'-isopropylidenediphenol and ethyl 4-hydroxybenzoate.

The phenolic resins can be homopolymers or copolymers, i.e., the individual Y or Z groups in a given phenolic developer resin may be the same or different and the Y groups may be located at different positions in accordance with the formula (I).

The developers may range from 500 to 5000 in molecular (number average) and preferably range from 1000 to 3000. The developer resins are often mixtures of dimers, trimers, and higher molecular weight oligomers. The molecular weight distribution of the resin will vary depending upon the nature of the phenol and the reaction conditions. Usually, the major part of the resin (i.e., greater than 50% by weight of the resin) is trimer or higher molecular weight compound, i.e., n is greater than 2 in formulae (I) and (II).

The phenolic developer resins may be metal-modified in a matter analogous to novolak developer resins to improve their reaction with color precursors and thereby improve the density and fastness of the image. For example, the phenolic developer resins can be modified by reaction with a salt of a metal selected from the group consisting of copper, zinc, cadmium, aluminum, indium, tin, chromium, cobalt, and nickel.

This modification can be made in an otherwise known manner. One method is by mixing and melting the resin with an alkanoate salt such as zinc propionate, zinc acetate, or zinc formate in the presence of an ammonium compound such as ammonium carbonate or ammonium acetate. The practice described in U.S.-A-4,173,684 can also be used.

The zinc-modified phenolic developer resins can also be formed by reacting zinc oxide or zinc carbonate and ammonium benzoate or ammonium formate with the resins in a manner analogous to the teachings in U.S.-A-4,165,102 and 4,165,103. Alternatively, the zinc-modified phenolic developer resins can be prepared by reaction with zinc chloride as shown in the examples below.

The metal content of the metal-modified phenolic developer resins should be more than 0.5 percent by weight and may range up to 15 percent by weight. Usually, a range of 1.5 to 5 percent by weight is used.

In addition, to chemically modifying the phenolic developer resins as described above, other means conventionally used in the art to improve the developing ability of phenolic developer resins, can be used in conjunction with the phenolic developer resins.

For example, acidic metal salts can be incorporated into coatings of the phenolic developer resins as described in U.S.-A-3,516,845 and 3,723,156. The phenolic developer resins can also be used in combination with other phenolic developer resins or compounds and need not be used alone.

Recording materials can be prepared in a conventional manner. To provide a developer sheet, the phenolic developer resin may be dissolved in an appropriate solvent (typically acetone) and applied to the surface of the paper by blade or roll coating or the like. Alternatively, the developer resin may be used in the form of a resin grind analogous to the resin grinds described in U.S.-A-3,924,027 to Saito et al. For example, the resin may be pulverized and mixed with an organic high molecular compound such as starch or styrene-butadiene latex. This mixture is dispersed in water or a solvent that does not readily dissolve the phenolic developer resin or the high molecular compound and coated on an appropriate support.

The developer resin is usually applied in an amount of about 0.09 to 0.18 kg (0.2 to 0.4 lbs.) of resin/120.8 m² (1300 sq. ft.) (solids).

Where a self-contained recording material is desired, a mixture of the phenolic developer resin and microcapsules containing the developer, can be coated upon a support as one layer or the developer and the microcapsules, can be applied in separate layers. For the preparation of photosensitive recording materials, see U.S.-A-Nos. 4,399,209 and 4,440,846.

The invention is illustrated in more detail by the following examples.

### Example I

30 mg of Sigma Type I horseradish peroxidase dissolved in 30 ml of 0.1 N potassium phosphate buffer, pH 9.0, 1.5 g of p-phenylphenol dissolved in 40 ml of ethanol and 12 ml of 3% hydrogen peroxide were each added to a dropping funnel. The dropping funnels were connected to a three-necked 300 ml round-bottom flask containing 100 ml of the phosphate buffer. While stirring constantly, the reagents were added drop-wise into the reaction flask. The reaction was allowed to proceed for ten minutes after the addition of the reagents. The product was collected by filtration and examined by thin layer chromatography.

### Example II

300 milligrams of Sigma Type I horseradish peroxidase dissolved in 200 ml of 0.1 N potassium phosphate buffer, pH 9.0 and 8.3 g of p-phenylphenol with 6.7 g of salicylic acid dissolved in 200 ml of ethanol were each added to a dropping funnel. The dropping funnels were connected to a two-liter three-necked round-bottom flask containing 30 ml of 3% hydrogen peroxide dissolved in one liter of phosphate buffer. While stirring constantly, the reagents were added dropwise to the reaction flask. The reaction was allowed to proceed for 15 mins. after the addition of the reagents. The product was collected by filtration and examined by thin layer chromatography.

The above product was air dried and redissolved in 100 ml ethanol containing 18.5 g of 1 N sodium hydroxide. To this, a solution of 100 ml water, 2 g zinc chloride and 1 ml of concentrated hydrochloric acid was added drop-wise. The pH was readjusted with 1 N sodium hydroxide until a precipitate formed and the product was collected by filtration.

### Example III

30 milligrams of Sigma Type I horseradish peroxidase dissolved in 20 ml of 0.1 N potassium phosphate buffer, pH 9.0 and 1.5 g of 1-naphthol dissolved in 20 ml of ethanol were each added to a dropping funnel. The dropping funnels were connected to a 300 ml three-necked round-bottom flask containing 3 ml of 3% hydrogen peroxide dissolved in 100 ml of the phosphate buffer. While stirring constantly, the reagents were added drop-wise to the reaction flask. The reaction was allowed to proceed for 10 mins. after the addition of the reagents. The product was collected by filtration and analyzed by thin layer chromatography.

### Example IV

30 milligrams of Sigma Type I horseradish peroxidase dissolved in 30 ml of 0.1 N potassium phosphate buffer, pH 9.0, 1.2 g of p-phenylphenol with 0.3 g of 4-aminosalicylic acid dissolved in 40 ml of ethanol and 12 ml of 3% hydrogen peroxide were each added to a dropping funnel. The dropping funnels were connected to a 300 ml three-necked round-bottom flask containing 100 ml of phosphate buffer. While stirring constantly, the reagents were added drop-wise to the reaction flask. The reaction was allowed to proceed for 15 mins. after the addition of the reagents. The product was collected by filtration and examined by thin layer chromatography.

### Example V

30 milligrams of Sigma Type I horseradish peroxidase dissolved in 30 ml of 0.1 N potassium phosphate buffer, pH 9.0 and 12 ml of 3% hydrogen peroxide were each added to a dropping funnel. The dropping funnels were connected to a 500 ml three-necked round-bottom flask containing 6.67 g of bisphenol A dissolved in 100 ml ethanol and 174 ml of the phosphate buffer. While stirring constantly, the reagents were added drop-wise to the reaction flask. The reaction was allowed to proceed for 30 mins. after the addition of the reagents. The viscous organic phase containing product was collected from a separatory funnel and was examined by thin layer chromatography.

### Example VI

10 g of p-phenylphenol with five grams of ethyl salicylate dissolved in 400 ml of ethanol, 120 ml of 3% hydrogen peroxide dissolved in 80 ml of 0.1 N potassium phosphate buffer, pH 9.0 and 120 mg of Sigma Type I horseradish peroxidase dissolved in 200 ml of the phosphate buffer were each added to Erlenmeyer flasks. While stirring constantly, the reagents were added drop-wise to a two-liter round-bottom flask using a peristaltic pump.

The reaction was allowed to proceed for 20 mins. after the addition of the reagents. The product was collected by filtration and examined by thin layer chromatography.

5 grams of product dissolved in 100 ml of acetone were added to a 500 ml round-bottom flask fitted with a condenser and containing 100 ml of an aqueous 50% potassium hydroxide solution. This solution was heated at reflux for 3 hrs. and allowed to cool to room temperature. Two grams of zinc chloride were added and allowed to stir for 10 mins. in the reaction flask. The reaction mixture was adjusted to pH 4 and poured into 1.2 liters of vigorously stirring cold water. The product was collected by filtration and examined by thin layer chromatography.

### Example VII

7 milligrams of Sigma Type I horseradish peroxidase dissolved in 80 ml of 0.05 N potassium phosphate buffer, pH 5.0 was added to a 250 ml round-bottom flask containing 5 g of 4-t-butylphenol and 5 g of p-phenylphenol dissolved in 20 ml of ethyl acetate. While stirring constantly, 135 ml of 0.8% hydrogen peroxide was added dropwise to the reaction flask. The reaction was allowed to proceed for 20 mins. after the addition of the peroxide. The organic phase containing product was collected, concentrated on a steam bath and examined by thin layer chromatography.

### Example VIII

7 milligrams of Sigma Type I horseradish peroxidase dissolved in 80 ml of 0.05 N potassium phosphate buffer, pH 5.0 was added to a 250 ml round-bottom flask containing 8 g of 4-t-butylphenol and 2 g of p-phenylphenol dissolved in 20 ml of ethyl acetate. While stirring constantly, 137 ml of 0.8% hydrogen peroxide was added dropwise to the reaction flask. The reaction was allowed to proceed for 20 mins. after the addition of the peroxide. The organic phase containing product was collected, concentrated on a steam bath and examined by thin layer chromatography.

### Example IX

7 milligrams of Sigma Type I horseradish peroxidase dissolved in 80 ml of 0.05 N potassium phosphate buffer, pH 5.0 was added to a 150 ml round-bottom flask containing 8 g of bisphenol A and 2 g of p-phenylphenol dissolved in 20 ml of ethyl acetate. While stirring constantly, 127 ml of 0.6% hydrogen peroxide was added dropwise to the reaction flask. The reaction was allowed to proceed for 20 mins. after the addition of the peroxide. The organic phase containing product was collected, concentrated on a steam bath and examined by thin layer chromatography. This resin was also zincated by a procedure described in U.S.-A-4,025,490.

### Example X

The ability of the resins to develop leuco dyes was tested by gravure printing a 3% solution of the resin on a strip of paper, spraying with CF detector, and determining the optical density on a MacBeth densitometer. Table I compares the optical densities of the above-mentioned experimental resins.

**Table I**

| Resin | Optical Density | |
|---|---|---|
| | Unzincated | Zincated |
| Example I | 28.41 | - |
| Example II | - | 29.47 |
| Example III | 36.40 | - |
| Example IV | 30.53 | - |
| Example V | 33.61 | - |
| Example VI | - | 25.67 |
| Example VII | 24.79 | - |
| Example VIII | 31.41 | - |
| Example IX | 29.53 | - |

## Claims

1. A process for the preparation of a phenolic resin which comprises: reacting a phenol with a peroxidase or an oxidase enzyme and a peroxide in an organic/aqueous medium to generate phenolic radicals which react to form a phenolic resin, said phenol being present in 1 to 100 grams per 100 ml solvent; and recovering said phenolic resin.

2. The process of claim 1 wherein said enzyme is reacted in an amount of 10 milligrams to 5 grams per 100 grams phenol.

3. The process of claim 2 wherein said process comprises dissolving said phenol in an organic solvent, dissolving said enzyme in water and mixing said solutions.

4. The process of claim 3 wherein said enzyme is horseradish peroxidase.

5. The process of claim 1 wherein said process further comprises forming a mixture of said phenol and said enzyme, and gradually adding said peroxide to said mixture.

6. The process of claim 1 wherein said peroxide is hydrogen peroxide.

7. The process of claim 1 wherein said reaction proceeds at a temperature of 0 to 40°C.

8. The process of claim 1 wherein said reaction is carried out at a pH in the range of 4 to 12.

9. The process of claim 1 wherein said phenolic resin has a molecular weight of 1,000 to 15,000.

10. The process of claim 1 wherein said phenolic resin has a molecular weight of 500 to 5,000.

11. The process of claim 1 wherein said organic/aqueous medium includes a first aqueous phase and a second water immiscible phase and said process includes the additional steps of recovering said phenolic resin from said water immiscible phase and recovering said enzyme from said aqueous phase.

12. The process of claim 1 wherein said organic aqueous medium has a water: organic volumetric ratio in the range of 1:2 to 2:1.

## Patentansprüche

1. Verfahren zur Herstellung eines Phenolharzes, umfassend:
- die Reaktion von einem Phenol mit einem Peroxidase- oder Oxidase-Enzym und einem Peroxid in einem organisch-wässrigen Medium zur Erzeugung von Phenyl-Radikalen, die unter Bildung eines Phenolharzes miteinander reagieren, wobei das Phenol in einer Konzentration von 1 bis 100 Gramm pro 100 ml Lösungsmittel vorliegt; und
- die Gewinnung des Phenolharzes.

2. die Verfahren nach Anspruch 1, wobei die Menge des reagierenden Enzyms 10 Milligramm bis 5 Gramm pro 100 Gramm Phenol beträgt.

3. Verfahren nach Anspruch 2, wobei das genannte Verfahren umfaßt: das Lösen des Phenols in einem organischen Lösungsmittel, das Lösen des Enzyms in Wasser und das Mischen dieser Lösungen.

4. Verfahren nach Anspruch 3, wobei es sich bei dem genannten Enzym um Meerrettichperoxidase handelt.

5. Verfahren nach Anspruch 1, wobei das genannte Verfahren weiterhin umfaßt: die Bildung einer Mischung des Phenols mit dem Enzym und die nach und nach erfolgende Zugabe des Peroxids in die genannte Mischung.

6. Verfahren nach Anspruch 1, wobei es sich bei dem genannten Peroxid um Wasserstoffperoxid handelt.

7. Verfahren nach Anspruch 1, wobei die Reaktion bei einer Temperatur von 0 bis 40°C stattfindet.

8. Verfahren nach Anspruch 1, wobei die Reaktion bei einem pH-Wert im Bereich von 4 bis 12 durchgeführt wird.

9. Verfahren nach Anspruch 1, wobei das Phenolharz ein Molekulargewicht von 1.000 bis 15.000 aufweist.

10. Verfahren nach Anspruch 1, wobei das Phenolharz ein Molekulargewicht von 500 bis 5.000 aufweist.

11. Verfahren nach Anspruch 1, wobei das organisch-wässrige Medium eine erste wässrige Phase und eine zweite, mit Wasser nicht mischbare, Phase enthält, und das genannte Verfahren die folgenden zusätzlichen Verfahrensschritte einschließt: die Gewinnung des Phenolharzes aus der mit Wasser nicht mischbaren Phase und die Gewinnung des Enzyms aus der wässrigen Phase.

12. Verfahren nach Anspruch 1, wobei das Volumenverhältnis des Wassers zu dem organischen Mittel in dem organisch-wässrigen Medium im Bereich 1:2 bis 2:1 liegt.

## Revendications

1. Procédé pour la préparation d'une résine phénolique qui comprend : la mise en réaction d'un phénol avec une peroxydase ou une enzyme oxydase et un peroxyde dans un milieu organique/aqueux pour générer des radicaux phénoliques qui réagissent pour former une résine phénolique, ledit phénol étant présent de 1 à 100 grammes pour 100 ml de solvant; et la récupération de ladite résine phénolique.

2. Procédé selon la revendication 1 dans lequel ladite enzyme est mise en réaction dans une quantité allant de 10 milligrammes à 5 grammes pour 100 g de phénol.

3. Procédé selon la revendication 2 dans lequel ledit procédé comprend la dissolution dudit phénol dans un solvant organique, la dissolution de ladite enzyme dans de l'eau et le mélange desdites solutions.

4. Procédé selon la revendication 3 dans lequel ladite enzyme est la peroxydase du raifort.

5. Procédé selon la revendication 1 dans lequel ledit procédé comprend de plus la formation d'un mélange dudit phénol et de ladite enzyme, et l'ajout graduel dudit peroxyde au dit mélange.

6. Procédé selon la revendication 1 dans lequel ledit peroxyde est de l'eau oxygénée.

7. Procédé selon la revendication 1 dans lequel ladite réaction se déroule à une température entre 0 et 40°C.

8. Procédé selon la revendication 1 dans lequel ladite réaction est menée à un pH compris entre 4 et 12.

9. Procédé selon la revendication 1 dans lequel ladite résine phénolique possède un poids moléculaire de 1000 à 15000.

10. Procédé selon la revendication 1 dans lequel ladite résine phénolique possède un poids moléculaire de 500 à 5000.

11. Procédé selon la revendication 1 dans lequel ledit milieu organique/aqueux comprend une première phase aqueuse et une seconde phase aqueuse immiscible et ledit procédé comprend les étapes additionnelles de récupération de ladite résine phénolique à partir de ladite phase aqueuse immiscible et ladite enzyme à partir de ladite phase aqueuse.

12. Procédé selon la revendication 1 dans lequel le milieu organique/aqueux présente un rapport volumétrique eau:organique allant de 1:2 à 2:1.
